# EUROPEAN PATENT APPLICATION

(11) **EP 0 685 286 A1**
(43) Date of publication of application: **06.12.1995**
(21) Application number: 95303604.3
(22) Date of filing: 26.05.1995
(51) Int. Cl.: B23H 7/06, B23H 7/10

(54) **Centering method of working start hole on wire electric discharge machine**

(30) Priority: 30.05.1994 JP 137866/94
(71) Applicant: FANUC LTD., Minamitsuru-gun, Yamanashi 401-05 (JP)
(72) Inventor: Kato, Junichi, FANUC Dai-3-virakaramatsu, Minamitsuru-gun, Yamanashi, 401-05 (JP); Masuda, Teruo, FANUC Dai-3-virakaramatsu, Minamitsuru-gun, Yamanashi, 401-05 (JP)
(74) Representative: Billington, Lawrence Emlyn

(57) **Abstract**

A centering method of a working start hole (3) on a wire electric discharge machine comprises the steps of obtaining a center (D) between two contact positions (B,C) at which the wire contacts opposite end faces of the working start hole (3) when the wire arranged in the working start hole (3) is moved in one direction and the opposite direction. Next, there is obtained a further center position (G) between further end face positions (E,F) at which the wire contacts the end face of the working start hole (3) when the wire is moved in a perpendicular direction to the one direction, and in the opposite direction to the perpendicular direction. The centering method also comprises obtaining a plurality of further center positions (G) by executing the described centering operation plural times in different directions, and obtaining a resultant center position of the working start hole (3) by using position coordinates of a plurality of the further center positions (G).

## Description

The present invention relates to a wire electric discharge machine, particularly to a centering method of positioning a wire at a center of a working start hole in the wire electric discharge machine.

There is a case in which a work to be worked (i.e. machined) is provided with a reference hole through which working is started, on a wire electric discharge machine. In this case, the wire passes through the working start hole, then the working is started. In a case where the working is started with the working start hole as a base, it is desired that the wire is positioned at a center of the working start hole due to the requirement of a working accuracy and the like. So, there has been proposed a wire electric discharge machine having an automatic centering function due to such requirement.

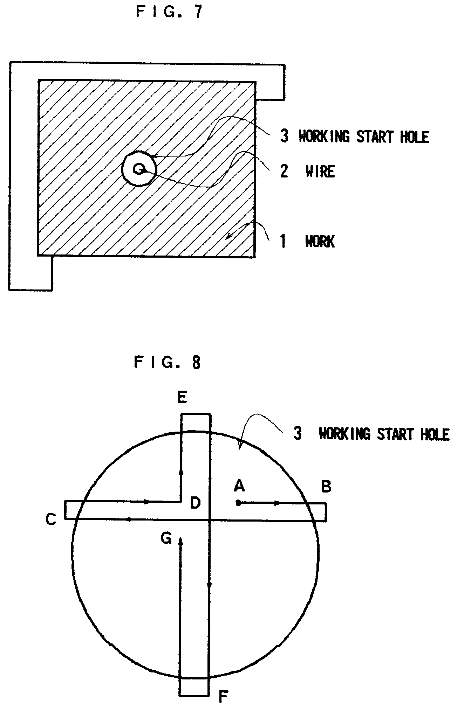

Fig. 7 is a view explaining an automatic centering. The automatically centering function is to position a wire 2 at a center of a working start hole 3 formed in a work 1. The automatically centering function is to detect a short-circuit signal obtained due to a contact of the work 1 and the wire 2, and to determine a center position of the hole. Fig. 8 is a view explaining a wire movement due to the automatically centering function. In Fig. 8, at first, the work 1 is set at a table, the wire 2 is passed through the hole, then the passed wire 2 is applied with a tension. In this state, the wire 2 is moved, for example, in an X axis direction of the drawing to detect an end face position B of the working start hole 3. The detection of the end face position B is executed by an end face positioning function of the wire electric machine. After the detection of the end face position B, the wire 2 is moved in an opposite direction then to detect an end face position C. A middle point D of the end face position B and the end face position C is obtained. The wire 2 is positioned on the obtained middle point D. Next, an end face detection similar to that mentioned above is executed from the middle point D in a Y axis direction, then the middle point G thereof is obtained. The obtained middle point G is defined as a center of the working start hole 3, and a centering is executed by moving the wire 2 to the center position thereof.

However, there is a problem that the centering is not always executed accurately by the proposed centering method of the working start hole of the wire electric discharging machine.

This problem is due to that the working start hole is not actually a true circle according to the existence of burrs by the working, and a way of the working.

It is, therefore, an object of the present invention to eliminate or reduce the aforementioned prior problems and provide a centering method of a working start hole which is not substantially influenced by the shape of the working start hole.

According to a first aspect of the present invention there is provided a centering method of a working start hole on a wire electric discharge machine, comprising the steps of: in the wire electric discharge machine, moving a wire arranged in a working start hole in one direction and an opposite direction to the one direction to bring the wire in contact with opposite end faces of the working start hole, thereby obtaining a center position thereof from the obtained two opposite end faces; moving the wire from said obtained center position in a perpendicular direction to the one direction and an opposite direction to the perpendicular direction, to bring the wire in contact with other opposite end faces of the working start hole, thereby obtaining a further center position thereof from the obtained two other opposite end faces; and executing a centering operation with the further center position as center position of the working start hole, wherein the method comprises the steps of: executing said centering operation plural times to obtain a plurality of said further center positions by making the one direction into a plurality of different directions respectively; and obtaining a resultant center position of the working start hole by using coordinates of said plurality of further center positions.

A centering operation thus provided is a series of operations comprising the steps of moving the wire in the one direction and in the opposite direction to the one direction, to obtain the contact positions at which the wire contacts the working start hole, to make the middle point between the two contact positions into a provisional center position. Further, the wire is moved from the provisional position in the perpendicular direction to the one direction and in the opposite direction to the perpendicular direction to obtain the contact positions at which the wire contacts the working start hole, to make the middle point between these latter two contact positions into a further center of the working start hole. Additionally, the present invention comprises the steps of executing the centering operation plural times with the moving directions of the wire made different, to thereby obtain a plurality of further center positions. Thereby, the center position of the working start hole may be obtained without influence of deformation of the working start hole due to burrs and a way of a working.

Thus in a centering method of the present invention, an average value may be calculated of the position coordinates of a plurality of further center positions obtained by the plurality of centering operations, so that the average value can be made into the center position of the working start hole.

In the plurality of centering operations in a centering method of the present invention, a movement start position of the wire at which the centering operation start is made may be the same position in the working start hole, or the center position obtained at the last centering operation, or the average position of the center positions obtained at the preceding centering operations.

According to a second aspect of the present invention there is provided a centering method of a working start hole on a wire electric discharge machine, comprising executing an end face position detecting operation plural times in which the wire arranged in a working start hole is moved to contact an end face of the working start hole, to thereby obtain an end face position at which the wire contacts, and obtaining a center position of the working start hole by using position coordinates of a plurality of the end face positions obtained by the plurality of end face position detecting operations.

The second aspect of the invention comprises the steps of bringing the wire in contact with the working start hole plural times, and obtaining the center position of the working start hole based on a plurality of the end face positions obtained by the end face position detecting operations for obtaining the contact positions. As moving direction of the wire in the working start hole, the moving direction of the wire after contacting the hole end face may be made different by an angle other than nπ (n is an integer) with respect to the last moving direction, in the plurality of the end face detecting operations. Thereby, the contact positions of the wire in the working start hole are made different from one another. Alternatively, in a plurality of end face detecting operations, the wire after contacting the hole end face may be returned to the same position in the working start hole, and the moving direction of the wire made different, from the same position, to the last moving direction. Thereby, the contacting position of the wire in the working start hole can be made different.

Also, in the second aspect of the invention, an average of a plurality of end face position coordinates obtained from a plurality of end face position detecting operations can be obtained, so that the average can be made into the center position of the working start hole. Alternatively, from the maximum value and the minimum value of a plurality of end face position coordinates obtained from a plurality of end face position detecting operations, an average of the maximum values and the minimum values can be made into the center position of the working start hole.

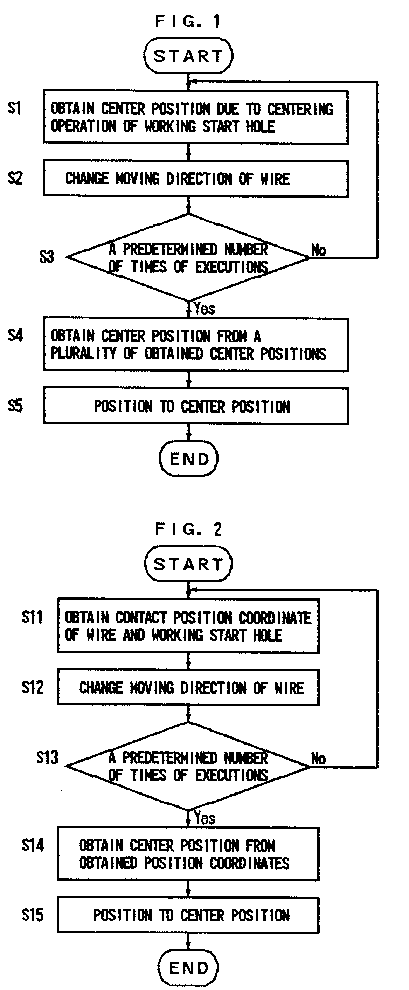

Fig. 1 is a flowchart explaining a centering method of a working start hole on a wire electric discharge machine according to the first aspect of the invention of the present application. According to this flowchart, the first aspect of the present invention is explained with respect to the references of the step S.

First, the center position is obtained by the centering operation of the working start hole (step S1). This centering operation is a series of operations as follows. The operation comprises the steps of moving a wire in one direction and an opposite direction thereto to obtain contact positions at which the wire contacts the working start hole, thereby making a middle point of the two contact positions into a provisional center. Then the wire is moved at right angles from the provisional center in one direction and an opposite direction thereto again to obtain the contact positions at which the wire contacts to the working start hole, thereby making a middle point of these two latter contact positions a further center of the working start hole.

This centering operation at the step S1 is repeated plural times while changing the moving direction of the wire (step S2, S3). A center position is obtained by a calculation such as an averaging for example, by using a plurality of further center positions obtained by a plurality of the predetermined centering operations (step S4). The wire is moved to the center position obtained at the step S4, so that the wire is set at a center of the working start hole (step S5).

Also, in the plurality of the centering operations, the movement start position of the wire at which the centering operation is started can be set variously. For example, the following settings may be realized: The wire may be set at the same position in the working start hole at each centering operation , from which same position the wire is started to move. Or, the wire may be moved to the position obtained by the last centering operation, from which position the next movement is started. Or, the center position is obtained by using the values obtained by the preceding respective centering operations, and the wire is moved to the obtained center position, from which the next movement is started.

Next, Fig. 2 is a flowchart explaining a centering method of a working start hole on the wire electric discharge machine according to the second aspect of the invention of the present application. According to this flowchart, the second aspect of the present invention is explained with respect to references of ten level of the step S. the step S.

First, the wire is moved in one direction in the working start hole, and the position coordinate is obtained of the contact position at which the wire and the inner face of the working start hole are contacted to each other (step S11). This operation of obtaining the position coordinate of the contact position is conducted plural times while changing the moving direction of the wire (step S12, S13). And, a center position is obtained by using a plurality of position coordinates of contact positions while the moving direction of the wire is changed (step S14). The wire is moved to the center position obtained at the step S4, so that the wire is set at a center of the working start hole (step S15).

As the moving direction of the wire in the working start hole, the moving direction of the wire after contacting the hole end face is altered by an angle other than nπ (n is an integer) with respect to the last moving direction, in respective end face detecting operations. By realizing such moving directions, the contact positions of the wire in the working start hole are made different from one another.

Also, in the plurality of end face detecting operations, the wire after contacting to the end face may be returned to the same position in the working start hole, and then the moving direction of the wire therefrom is made different from the last moving direction. Thereby, the contacting positions of the wire in the working start hole are made different from one another.

Also, as a method of obtaining a middle position by using the coordinates of a plurality of contact points, an average may be calculated of a plurality of the end face position coordinates obtained due to a plurality of the end face position detecting operations, so that the average can be made into the center position of the working start hole. Or, the maximum value and the minimum value of a plurality of the end face position coordinates obtained due to a plurality of the end face position detecting operations may be obtained, and an average of the maximum value and the minimum value can be made into the center position of the working start hole.

As a result of employing a centering method of the working start hole of the wire electric discharge method according to the present invention, the following effects may be attained:

In the wire electric discharge machine, the centering of the working start hole can be conducted irrespective of the shape of the working start hole.

These objects of the present invention and other objects and advantages can be confirmed readily with the following descriptions and the accompanying drawings.
Fig. 1 is a flowchart explaining a centering method of a working start hole of a first aspect of the present invention;
Fig. 2 is a flowchart explaining a centering method of a working start hole of a second aspect of the present invention;
Fig. 3 is a flowchart of a first embodiment of the first aspect;
Fig. 4 is a flowchart explaining a centering operation used in an embodiment of the present application;
Fig. 5 is a view explaining a movement of the wire in the first embodiment of the first aspect of the present invention;
Fig. 6 is a view explaining a movement of the data in the first embodiment of the first aspect of the present invention;
Fig. 7 is a view explaining a previously proposed automatic centering;
Fig. 8 is a view explaining a movement of the wire in the automatic centering function;
Fig. 9 is a flowchart explaining a centering operation used in a second embodiment of the first aspect of the present invention;
Fig. 10 is a view explaining a movement of the wire the second embodiment of the first aspect of the present invention;
Fig. 11 is a view which explains a movement of the data in the second embodiment of the first aspect of the present invention;
Fig. 12 is a flowchart of a third and a fourth embodiments of the first aspect of the present invention;
Fig. 13 is a view explaining a movement of the wire in the third and the fourth embodiments of the first aspect of the present invention;
Fig. 14 is a view explaining a movement of the data in the third embodiment of the first aspect of the present invention;
Fig. 15 is a view explaining a movement of the data in the fourth embodiment of the first aspect of the present invention;
Fig. 16 is a flowchart of a fifth embodiment with respect to the second aspect of the present invention;
Fig. 17 is a view explaining a movement of the wire in the fifth embodiment with respect to the second aspect of the present invertion;
Fig. 18 is a flowchart of a sixth embodiment with respect to the second aspect of the present invention; and
Fig. 19 is a view explaining a movement of the wire in the sixth embodiment with respect to the second aspect of the present invention.

Embodiments of the present invention will be described in detail hereinafter with reference to the drawings. However, the present invention is not limited to the embodiments.

First, a first embodiment to a fourth embodiment of the first inventive aspect of the present application will be described. (The first embodiment of the first aspect of the invention).

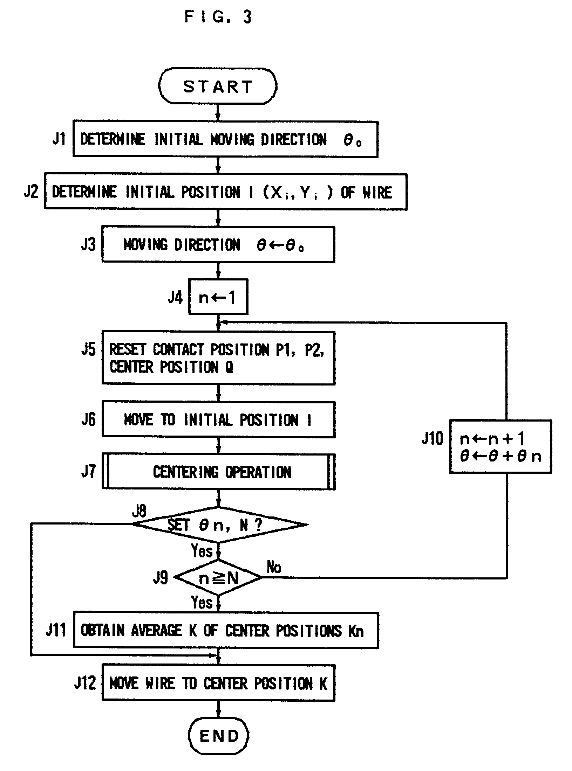

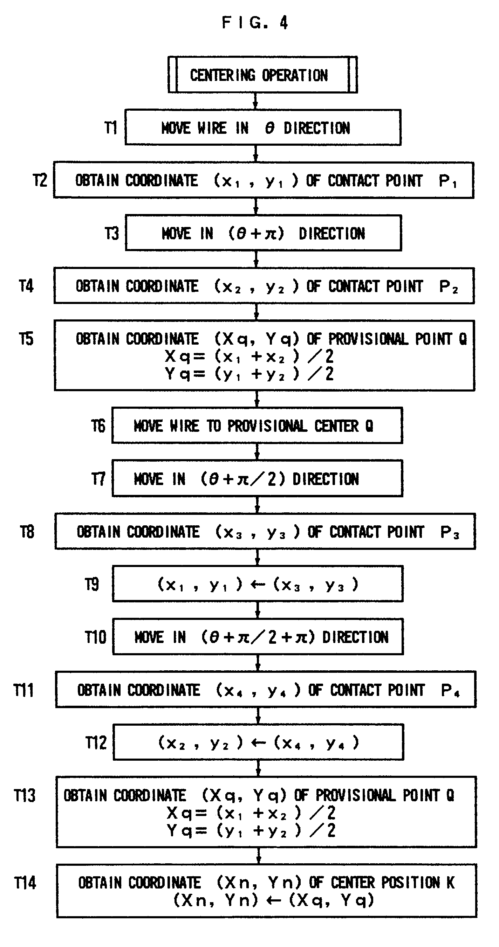

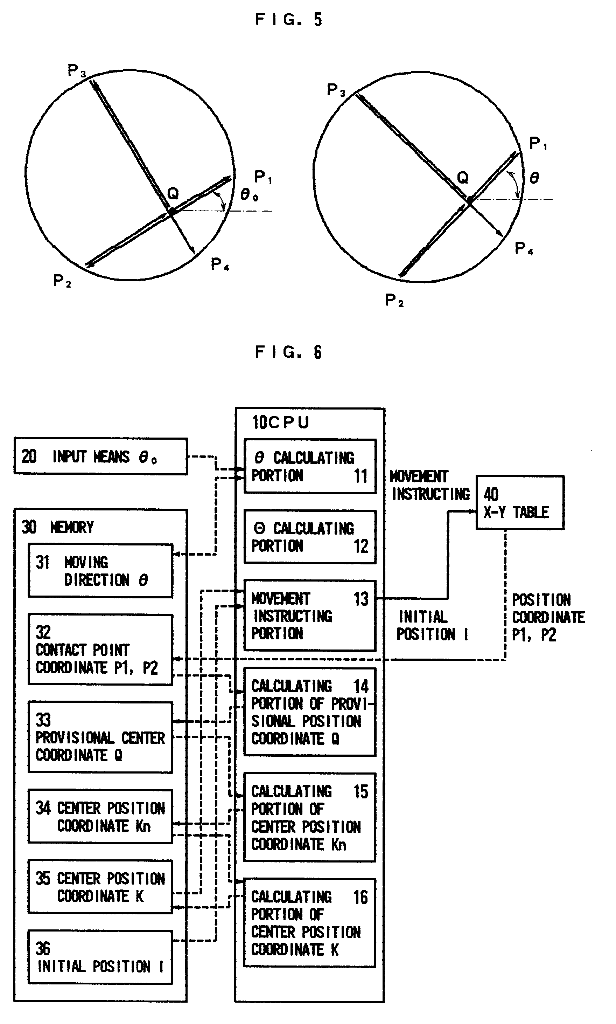

First, the first embodiment of the first aspect of the present invention will be described with reference to Fig. 3 which is a flowchart of the first embodiment of the first aspect, Fig. 4 which is a flowchart explaining a centering operation, Fig. 5 which is a view explaining a movement of the wire in the first embodiment of the first aspect, and Fig. 6 which is a view explaining a movement of the data of the first embodiment of the first aspect. Incidentally, in the flowchart of Fig. 3, the explanation will be realized according to the references of the step J.

The first embodiment of the invention is to execute the following centering operation of the working start hole of the wire electric discharge machine, and is notable in that the movement start position of the wire is set to the same position in respective centering operations.

The centering operation comprises the steps of using a contact position at which the wire contacts to an end face of a working start hole when the wire arranged in a working start hole is moved in one direction, and a contact position at which the wire contacts to another end face of the working start hole when the wire is moved in an opposite direction to the one direction, to obtain a center position thereof, next, using a contact position to which the wire contacts to an end face of the working start hole when the wire is moved in a perpendicular direction different by an angle of π/2 to the one direction, and a contact position at which the wire contacts to another end face of the working start hole when the wire is moved in an opposite direction to the perpendicular direction, to obtain a center position thereof, and then making the obtained center position into a center position of the working start hole, and further, executing plural times centering operations with the obtained center position as a center position of the working start hole while altering the moving direction of the wire, to obtain a plurality of center positions. An average value position coordinates of a plurality of the center positions is obtained.

These steps will be described in order hereinafter.

Step J1: First, a moving direction ϑ₀ in which the wire is moved is determined.

Step J2: Next, the wire is arranged at a point Q in the working start hole, and a coordinate (X₁, Y₁) of an initial position I thereof is determined. The position coordinate of the point Q in the initial position can be obtained by a position coordinate from a X-Y table 40 for driving the wire, which position coordinate is stored in a memory of the initial position I.

Step J3: Next, a direction ϑ₀ is set in the moving direction ϑ. Fig. 5 a is a view explaining a movement state of the wire in the first centering operation. In the first centering operation, the direction at which the wire moves at first is made into the direction ϑ₀ with respect to an X axis. The direction ϑ₀ can be set optionally. The ϑ₀ can be stored from an input means 20 to a movement direction memory 31 in a memory 30 through a ϑ calculation portion in CPU 10 in Fig. 6.

Step J4: An index n is set at 1 in order to execute a plurality of the centering operations. The centering operation can be repeated by a predetermined number N due to the setting of the index n.

Step J5: In respective centering operations, a memory 32 for storing two contact positions of the wire and the working start hole, and a memory 33 for storing a provisional center position coordinate Q are reset to be cleared in order to obtain the center position.

Step J6: In respective centering operations, the wire is moved to be set to the coordinate (X₁, Y₁) of the initial position I in the working start hole. This operation is executed by reading out the initial position I stored in an initial position memory 36, inputting the read out value in a movement instruction portion 13 in CPU 10, and outputting an movement instruction to the X-Y table 40.

Step J7: Next, the centering position Kn of the working start hole is obtained based on the centering operation step. This centering position Kn of the working start hole is stored in a center position coordinate memory 34 in the memory 30. The centering operation step will be described with reference to the flowchart of Fig. 4.

Step J8: In the aforementioned step J7, it is judged whether or not a plurality of centering operations are executed after the center position Kn of one working start hole. When the centering operation is executed only one time, the process proceeds to step 12 to move the wire to the center position Kn obtained in the last Step J7, then the centering of the wire is finished.

Also, when a plurality of the centering operations are executed, the center position is obtained from the next steps J9, J10 and J11.

The judgment is executed based on whether or not a changing step amount ϑn of an angle of changing the moving direction of the wire and the number of times N of the centering operation are set.

Step J9: If the number of times of the centering operation is N, it is compared with the index n representing an integral number of times of respective centering operations. The process proceeds to a next step J10 if the index n is less than N, and the process proceeds to step J11 if the index n is not less than N.

Step J10: If the integral number of times of respective centering operations is less than the set repeat number of times N, n is added with 1, and ϑ is added with the changing step amount ϑn of the angle to be renewed as a new angle ϑ, then the process is returned to the step J5. And, The steps J5 to J8 are repeated, then -the centering operations are executed by the set repeat number of times N. N values of the center position coordinates Kn are stored in the center position coordinate memory 34 in the memory 30 due to this repeat of the steps J5 to J8.

Step J11: If the index n becomes not less than N and the integral number of times of respective centering operations becomes the set repeat number of times N, N values of the coordinates of the center position coordinates Kn are read out to the calculating portion 16 of the center position coordinate K, an average of N values of the center position coordinates Kn is obtained to be a center position coordinate K at the calculation portion 16, then to be stored in the center position coordinate memory 35 of the memory 30. The center position K stored in the center position coordinate memory 35 is a center position of the working start hole to be obtained.

Step J12: The center position K stored in the center position coordinate memory 35 is read out to the movement instruction portion 13 in the CPU 10. And, the movement instruction is outputted to the X-Y table 40, then the wire is moved to the center of the working start hole. (A centering operation)

The centering operation executed at the step J6 is a series of operations in the following . That is, the wire is moved in one direction and an opposite direction thereto to contact to the working start hole, thereby two of contact positions are obtained, a middle point of two of the contact positions is made into a provisional center, then the wire is moved from the provisional center in one direction and an opposite direction thereto again to contact to the working start hole, thereby two of the contact positions are obtained, and a middle point of these two of the contact positions is made into a center of the working start hole.

This centering operation will be described with reference to Fig. 6 which is a view showing a movement of the wire, and Fig. 4 which is a flow chart explaining the centering operation. Incidentally, this flowchart will be explained with respect to the references of the step T.

Step T1: First, the wire is moved in a moving direction ϑ set previously. The wire is moved based on the following operations. The ϑ is read out from the moving direction memory 31 in the memory 30 to the ϑ calculating portion 11 of CPU 10. The moving direction Θ calculating portion 12 calculates the direction Θ in which the wire is moved actually, by using the value of ϑ. And, the calculating portion 12 drives the X-Y table 40 through the movement instructing portion 13.

Step T2: The contact of the wire and the working start hole is detected by a detection of a short circuit and the like. And, a coordinate (x₁, y₁) of this contact point P₁ is obtained. The coordinate (x₁, y₁) of this contact point P₁ is obtained from the X-Y table 40, the obtained coordinate value is stored in the contact point coordinate memory 32 in the memory 30.

Step T3: Next, the moving direction Θ calculating portion 12 adds π to the moving direction ϑ of the wire to obtain the moving direction Θ of the wire. And, this moving direction Θ is inputted to the movement instructing portion 13 to drive the X-Y table 40, then the wire is moved in a (ϑ+π) direction.

Step T4: A coordinate (x₂, y₂) of a contact point P₂ is obtained based on the same operation of the step T2. The coordinate (x₂, y₂) of this contact point P₂ is obtained from the X-Y table 40, the obtained coordinate value is stored in the contact point coordinate memory 32 in the memory 30.

Step T5: The coordinate (x₁, y₁) of the contact point P₁ and the coordinate (x₂, y₂) of the contact point P₂ obtained at the step T2 and the step T4 respectively and stored in the contact point coordinate memory 32 are read out to a provisional center position coordinate Q calculating portion 14 in CPU 10 to thereby obtain the coordinate (Xq, Yq) of the provisional center Q. This coordinate (Xq, Yq) of the provisional center Q can be obtained by, for example, executing an averaging by an calculation of Xq=(x₁+x₂)/2, Yq=(y₁+y₂)/2.

This coordinate (Xq, Yq) of the provisional center Q is stored in the provisional center position coordinate memory 33 in the memory 30.

Step T6: The wire is moved to a position of the provisional center Q obtained at the step T5. This provisional center Q is made into a starting point from which the wire is moved.

Step T7: Next, the moving direction Θ calculating portion 12 adds π/2 to the aforementioned moving direction ϑ of the wire. And, the calculating portion 12 inputs the moving direction Θ to the movement instructing portion 13, thereby the X-Y table 40 is driven and the wire is moved in (ϑ+π/2) direction.

Step T8, T9: The coordinate (x₃, y₃) of the contact point P₃ is obtained by the same operation of the steps T2, T4. The coordinate (x₃, y₃) of the contact point P₃ can be obtained from the X-Y table 40. The obtained coordinate value is stored in the contact point coordinate memory 32 in the memory 30, and then substituted with the value of the coordinate (x₁, y₁) of the last contact point P₁.

Step T10: Next, the moving direction Θ calculating portion 12 adds π/2+π to the aforementioned direction ϑ of the wire. And, the calculating portion 12 inputs the moving direction Θ to the movement instructing portion 13, thereby the X-Y table 40 is driven and the wire is moved in (ϑ+π/2+π) direction.

Step T11, T12: The coordinate (x₄, y₄) of the contact point P₄ is obtained by the same operation of the steps T2, T4, T8. The coordinate (x₄, y₄) of the contact point P₄ can be obtained from the X-Y table 40. The obtained coordinate value is stored in the contact point coordinate memory 32 in the memory 30, and then substituted with the value of the coordinate (x₂, y₂) of the last contact point P₂.

Step T13: The coordinate (x₃, y₃) of the contact point P₃ and a coordinate (x₄, y₄) of the contact point P₄ obtained at the step T9 and the step T10 respectively and stored in the contact point coordinate memory 32 are read out to a provisional center position coordinate Q calculating portion 14 in CPU 10 to thereby obtain the coordinate (Xq, Yq) of the provisional center Q. This coordinate (Xq, Yq) of the provisional center Q can be obtained by, for example, executing an averaging by a calculation of Xq=(x₃+x₄)/2, Yq=(y₃+y₄)/2.

This coordinate (Xq, Yq) of the provisional center Q is stored in the provisional center position coordinate memory 33 in the memory 30.

Step T14: The coordinate (Xq, Yq) of the provisional center Q obtained at the step T13 is made into a coordinate (Xn, Yn) of the center position coordinate Kn. This coordinate (Xn, Yn) of the center position coordinate Kn is a coordinate of the center position obtained by the centering operation. (The second embodiment of the first aspect of the invention).

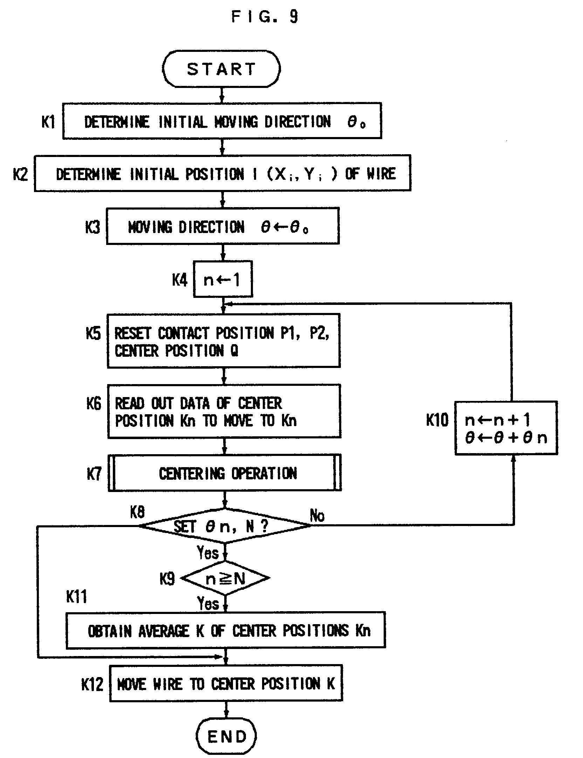

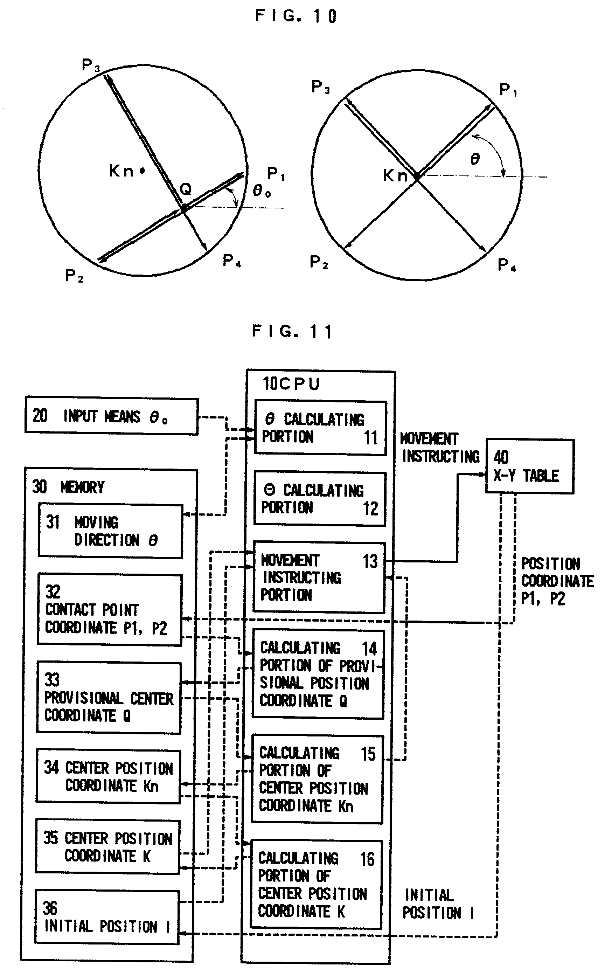

Next, the second embodiment of the first aspect of the present invention will be described with reference to Fig. 9 which is a flowchart relating to the second embodiment of the first aspect, Fig. 10 which is a view explaining a movement of the wire of the second embodiment of the first aspect of the present invention, and Fig. 11 which is a view explaining a movement of the data of the second embodiment of the first aspect of the present invention. Incidentally, in the flowchart in Fig. 9, the explanation will be according to the references to Step K.

The second embodiment of the first aspect of the invention is, similarly to the aforementioned first embodiment, to execute the following centering operation of the working start hole of the wire electric discharge machine, and is notable in that the movement start position of the wire is made into the center position obtained by the respective centering positions, in respective centering operations. The centering of the working start hole is to execute the centering operation plural times with the moving direction made different to obtain a plurality of center positions, and then obtaining an average of the position coordinates of a plurality of the center positions.

The operations of the second embodiment shown in the flowchart of Fig. 9 is similar to that of the first embodiment shown in the flowchart in Fig. 3, but is different in the step K6 thereof. Accordingly, in the following descriptions, only the step K6 will be explained, and the explanations are omitted with respect to the other steps.

Step K6: In respective centering operations, the wire is moved to the coordinate (Xn, Yn) of the center position Kn in the working start hole. This operation can be executed by reading out the coordinate of the center position Kn stored in the center position coordinate memory 34, inputting the value thereof to the movement instruction portion 13 in CPU 10 and outputting to the movement instruction to the X-Y table 40.

The coordinate of the center position Kn is applied with the value stored in the center position coordinate memory 34 at the step T14 in the centering operation step at a step K7.

The second embodiment is to execute a first centering operation by moving the wire due to the initial position set at first as shown in Fig. 10(a), and to make the center position Kn obtained by the said centering operation into the moving start position of the wire, in the next centering operation, as shown in Fig. 10(b). (The third embodiment of the first aspect of the invention).

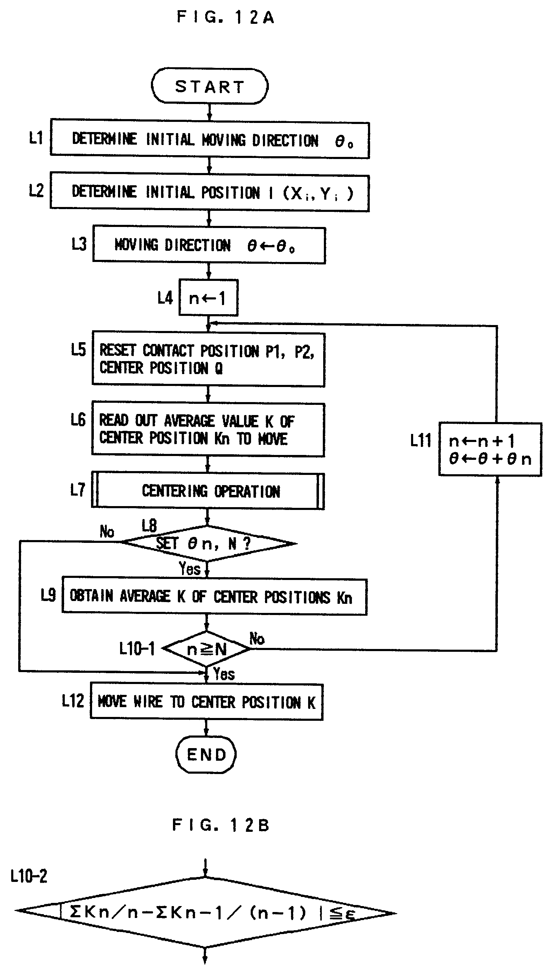

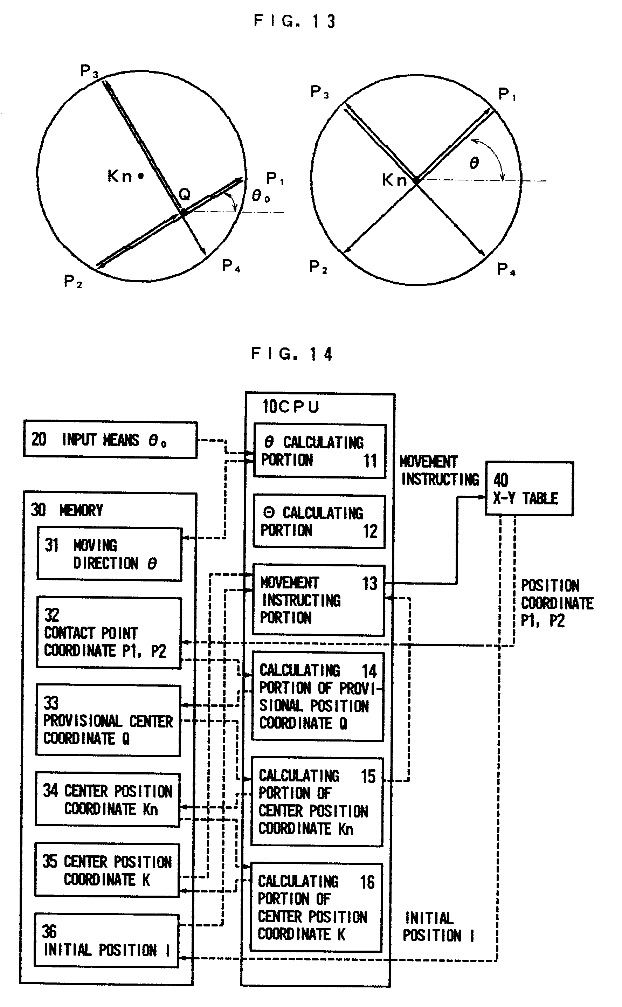

Next, the third embodiment of the first aspect of the present invention will be described with reference to Fig. 12 which is a flowchart of third and fourth embodiments of the first inventive aspect, Fig. 13 which is a view explaining a movement of the wire of the third and the fourth embodiments of the invention, and Fig. 14 which is a view explaining a movement of the data of the third and the fourth embodiments of the invention. Incidentally, in the flowchart in Fig. 12, the explanation will be according to the reference to Step L.

The third embodiment of the invention is, similarly to the first and second embodiments of the invention, to execute the following centering operation of the working start hole of the wire electric discharge machine, and is notable in that the average value of the center positions obtained by the respective centering positions is made the movement start position of the wire in respective centering operations. The centering of the working start hole is to execute the centering operation plural times with the moving direction altered to obtain a plurality of center positions, and then obtaining an average of the position coordinates of a plurality of the center positions.

The operation of the third embodiment shown in the flowchart of Fig. 12 is similar to those of the first and second embodiments shown in the flowchart in Fig. 3, but is different in the steps L6, L9 to L11 thereof. Accordingly, in the following descriptions, only the steps L6, L9 to L11 will be explained, and the explanations are omitted with respect to the other steps.

Step L6: In respective centering operations, the wire is moved to be set to the coordinate (X₀, Y₀) of the center position K obtained by averaging the coordinates (Xn, Yn) of the center positions Kn in the working start hole. This operation can be executed by reading out the coordinate of the center position K stored in the center position coordinate memory 35, inputting the value thereof to the movement instructing portion 13 in CPU 10 and outputting the movement instruction to the X-Y table 40.

The coordinate of the center position Kn is applied with the value stored in the center position coordinate memory 35 at the step T9 in the centering operation step at a step L7.

Step L9 to L11: An average value K of the center positions Kn obtained at the preceding centering operations in the respective centering operations is obtained.

The third embodiment is to execute a first centering operation by moving the wire due to the initial position set at first as shown in Fig. 13(a), and to make the center position Kn obtained by the said centering operation into the moving start position of the wire, in the next centering operation as shown in Fig. 13(b). (The fourth embodiment of the first aspect of the invention)

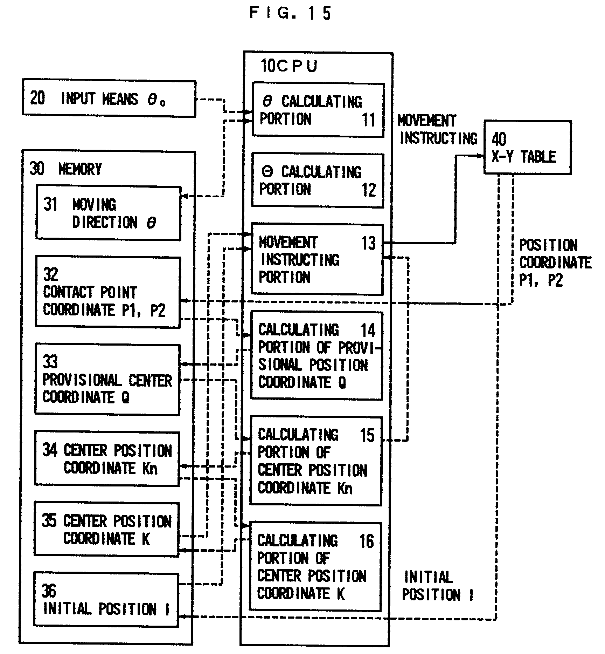

Next, the fourth embodiment of the first aspect of the present invention will be described with reference to Fig. 12 which is a flowchart of the third and the fourth embodiments of the first invention, Fig. 13 which is a view explaining a movement of the wire of the third and the fourth embodiments, Fig. 14 which is a view explaining data of the wire of the third embodiment, and Fig. 15 which is a view explaining a movement of the data of the fourth embodiment. Incidentally, in the flowchart in Fig. 12, the explanation will be according to the reference to Step L.

The fourth embodiment of the first inventive aspect is, similarly to the third embodiment of the first inventive aspect, to execute the following centering operations of the working start hole of the wire electric discharge machine, and is notable in that the number of times of centering operations executed plural times is judged by comparing a difference between the last center position and the current center position with the set value, instead of counting. The centering of the working start hole is to execute the centering operation plural times with the moving direction altered to obtain a plurality of center position, and then obtaining an average of position coordinates of a plurality of the center positions.

The operations of the fourth embodiment shown in the flowchart of Fig. 12 is similar to that of the third embodiment shown in the flowchart in Fig. 12, but is different in that the step L10 is substituted with L10-2 thereof. Accordingly, in the following description , only the step L10-2 will be explained, and the explanations are omitted with respect to the other steps.

Step L10-2: In the step L10 of the aforementioned third embodiment, the index n and the set number of times N are compared with each other, for example, if the value of the counter becomes not less than N, the centering operation is finished. On the other hand, In the fourth embodiment, the difference between the average of the coordinates of the center positions Kn until (n-1)-th times and the average of the coordinates of the center positions Kn until n-th times is obtained, and the difference is compared with the set value ε. And, if the difference is not greater than ε, the centering operation is finished. The set value ε is set previously with a considerably small value.

The fourth embodiment is, similarly to the third embodiment, to execute a first centering operation by moving the wire due to the initial position set at first as shown in Fig. 13(a), and to execute the average of coordinates of the center positions Kn by the centering operation in each centering operation, and to make the center position Kn obtained by the centering operation into the moving start position of the wire, in the next centering operation as shown in Fig. 13(b).

Next, the fifth and the sixth embodiments will be described hereinafter, with respect to the second aspect of the present invention. (The fifth embodiment with respect to the second aspect of the invention).

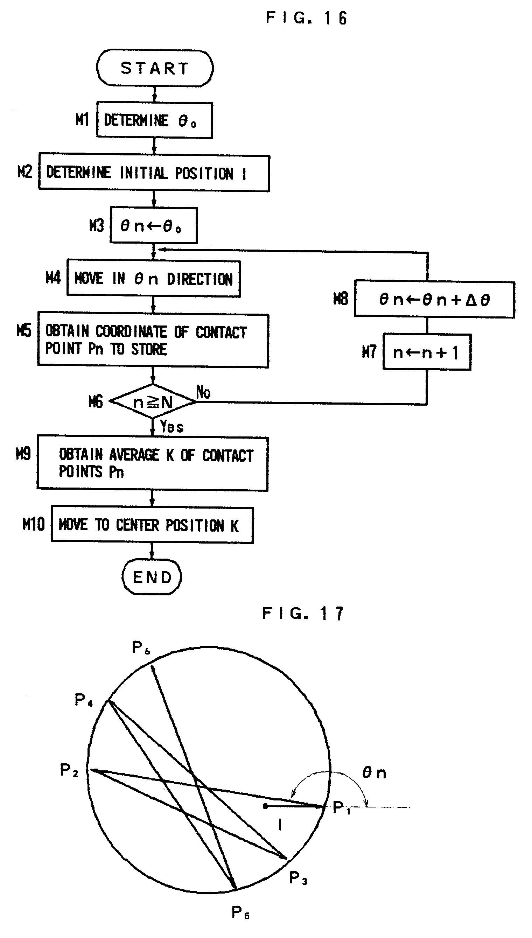

Next, the fifth embodiment with respect to the second inventive aspect will be described with reference to Fig. 16 which is a flowchart of the fifth embodiment of the invention, and Fig. 17 is a view explaining a movement of the wire of the fifth embodiment of the invention. Incidentally, in the flowchart in Fig. 16, the explanation will be realized according to the references to step M.

The fifth embodiment with respect to the second aspect of the invention comprises the steps of executing plural times an end face position detecting operation in which the wire arranged in a working start hole is moved in one direction to bring the wire in contact with an end face of the working start hole, to thereby obtain a position on the end face to which the wire contacts, and obtaining a center position of the working start hole by using position coordinates of a plurality of the end face positions obtained due to a plurality of the end face position detecting operations, and altering a moving direction of the wire in the working start hole after contacting the working start hole by an angle other than nπ (n is an integer) from the last moving direction in a plurality of the end face detecting operations, thereby altering the contacting position of the wire in the working start hole.

Step M1: First, a moving direction ϑ₀ in which the wire is moved is determined.

Step M2: Next, the wire is arranged at a point I in the working start hole, and a coordinate (X₁, Y₁) of an initial position I thereof is determined. The position coordinate of the point I in the initial position can be obtained by a position coordinate from the X-Y table 40, which is stored in an initial position I memory 36.

Step M3: The moving direction of the wire is made into ϑn in order to change the moving direction of the wire in order, and ϑ₀ is set to ϑn as the first moving direction.

Step M4: Next, the moving direction Θ calculating portion 12 obtains the moving direction Θ of the wire due to the aforementioned moving direction ϑ of the wire. And, the calculating portion 12 inputs the moving direction Θ to the movement instructing portion 13, to thereby the X-Y table 40 and the wire is moved in the ϑn direction.

Step M5: The contact of the wire and the working start hole due to the movement of the wire is detected, and a coordinate (xn, yn) of the contact points Pn are obtained. The coordinates (xn, yn) of the contact points Pn are obtained from the X-Y table 40, the obtained coordinate values are stored in the contact point coordinate memory 32 in the memory 30.

Step M6, 7, 8: Next, the index n and the set number of times N is compared with each other in order that the wire is moved plural times while changing the moving direction ϑn of the wire (Step M6). When the index n is less than the set number of times N, the index n is incremented (Step M7) and the moving direction ϑn is increased in angle (Step M8). The angle increasing of the moving direction ϑn can be, for example, executed by adding an increasing amount Δϑ to ϑn.

Step M9: Next, an average value K is calculated of coordinate positions of a plurality of the contact points Pn obtained in the aforementioned steps. This average value K is made into a center position. This average value K can be stored in the center position coordinate memory 35.

A step M10: The center position stored in the center position coordinate memory 35 is read out to the movement instruction portion 13 in the CPU 10, and the movement instruction is outputted to the X-Y table 40, then the wire is moved to the center of the working start hole. First, the wire is moved from the initial position I in the X axis direction, for example, and the coordinate of the contact point P₁ at which the wire contacts to the working start hole is obtained. Next, this contact point P1 is made into the starting point, so that the wire is moved at an angle of ϑn with respect to the last moving direction. The coordinate of thenext contact point P₂ of the wire due to this movement is obtained. Similarly, a plurality of contact points Pn are obtained, and a center position of the working start hole is obtained for a plurality of these contact points Pn. (The sixth embodiment with respect to the second aspect of the invention).

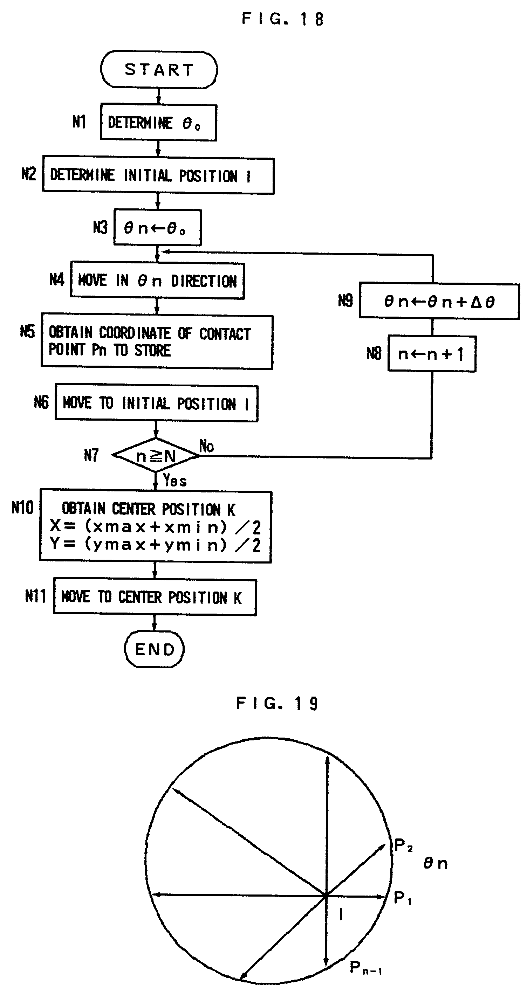

Next, the sixth embodiment with respect to the second inventive aspect will be described with reference to Fig. 18 which is a flowchart of the sixth embodiment of the invention, and Fig. 19 which is a view explaining a movement of the wire of the sixth embodiment of the invention. Incidentally, in the flowchart in Fig. 18, the explanation will be realized according to the references to step N.

The sixth embodiment with respect to the second aspect of the invention comprises the steps of executing plural times an end face position detecting operation in which the wire arranged in a working start hole is moved in one direction to bring the wire in contact with an end face of the working start hole, to thereby obtain a position on the end face to which the wire contacts, and obtaining a center position of the working start hole by using positional coordinates of a plurality of the end face positions obtained due to a plurality of the end face position detecting operations, altering the contact position of the wire in the working start hole by altering the moving direction of the wire in the working start hole from the same position in a plurality of the end face detecting operations, and obtaining the maximum value and the minimum value with respect to the X axis and the Y axis in the coordinates of the different contact positions to make an average center position of the maximum value and the minimum value into a center position of the working start hole.

Comparison of the flowchart relating to the centering method of the sixth embodiment shown in Fig. 18 with that of the fifth embodiment shown in Fig. 16 shows a difference in the step N6 corresponding to the next step after the step M5, and in the step N10 corresponding to the step M9, and identity in the other steps with the centering method of the fifth embodiment. Accordingly, in the following descriptions, only the steps N6 and N19 will be explained.

Step N6: The coordinates (xn, yn) of the contact points Pn are obtained by detecting the contacts with the working start hole due to the movement of the wire in the step N5. The next movement start position of the wire is set to the last movement start position of the wire. For example, wire starts to move from the initial position I. In Fig. 19, the movement start position of the wire to the contact points P₁, P₂, ... Pn-1 is made into the initial position I.

Step N10: The maximum value xmax and the minimum value xmin in the X axis, and the maximum value ymax and the minimum value ymin in the Y axis are obtained from a plurality of contact positions obtained at the steps N4 to N9. And, an average ((xmax + xmin)/2) of the xmax and xmin is obtained, so that the X axis coordinate of the center position K is obtained. Also, an average ((ymax + ymin)/2) of the ymax and ymin is obtained, so that the Y axis coordinate of the center position K is obtained.

In Fig. 19, first, the wire is moved from the initial position I in the X axis direction, for example, to bring the wire in contact with the working start hole at the contact point P₁, thereby obtaining the coordinate of this contact point. Next, the wire is returned to the initial position I again, and is moved from the initial position I as the starting point at an angle ϑn with respect to the last moving direction, to bring the wire in contact to the working start hole at the contact point P₂, thereby obtaining the coordinate of this contact point. Similarly, the coordinates of a plurality of contact points Pn are obtained, the center position of the working start hole is obtained from the coordinates of a plurality of the contact points Pn. Referring back to Fig. 8, it can be seen that in the first aspect of the invention a centering method of a working start hole 3 on a wire electric discharge machine comprises the steps of obtaining a center D between two contact positions B,C at which the wire contacts opposite end faces of the working start hole 3 when the wire arranged in the working start hole 3 is moved in one direction and the opposite direction. Next, there is obtained a further center position G between further end face positions E,F at which the wire contacts the end face of the working start hole 3 when the wire is moved in a perpendicular direction to the one direction, and in the opposite direction to the perpendicular direction. The centering method also comprises obtaining a plurality of further center positions G by executing the described centering operation plural times in different directions, and obtaining a resultant center position of the working start hole 3 by using position coordinates of a plurality of the further center positions G.

## Claims

1. A centering method of a working start hole on a wire electric discharge machine, comprising the steps of: in the wire electric discharge machine,
moving a wire arranged in a working start hole in one direction and an opposite direction to the one direction to bring the wire in contact with opposite end faces of the working start hole, thereby obtaining a center position thereof from the obtained two opposite end faces;
moving the wire from said obtained center position in a perpendicular direction to the one direction and an opposite direction to the perpendicular direction, to bring the wire in contact with other opposite end faces of the working start hole, thereby obtaining a further center position thereof from the obtained two other opposite end faces; and
executing a centering operation with the further center position as center position of the working start hole,
wherein the method comprises the steps of:
executing said centering operation plural times to obtain a plurality of said further center positions by making the one direction into a plurality of different directions respectively; and
obtaining a resultant center position of the working start hole by using coordinates of said plurality of further center positions.

2. A centering method of a working start hole on a wire electric discharge machine according to claim 1, wherein an average value is obtained of the position coordinates of said plurality of further center positions, so that the average is made into said resultant center of the working start hole.

3. A centering method of a working start hole on a wire electric discharge machine according to claim 1 or 2, wherein a movement start position at which the wire starts the centering operation is the same working start position in each of the plurality of the centering operations.

4. A centering method of a working start hole on a wire electric discharge machine according to claim 1 or 2, wherein in each of a plurality of centering operations, a movement start position at which the wire starts the centering operation is the further center position obtained in the previous centering operation.

5. A centering method of a working start hole on a wire electric discharge machine according to claim 1 or 2, wherein in each of a plurality of centering operations, a movement start position at which the wire starts the centering operation is an average position of the further center positions obtained in the preceding centering operations.

6. A centering method of a working start hole on a wire electric discharge machine, wherein the method comprises the steps of: in the wire electric discharge machine,
executing plural times an end face position detecting operation in which the wire arranged in a working start hole is moved to bring the wire in contact with an end face of the working start hole, to thereby obtain a position on the end face to which the wire contacts; and
obtaining a center position of the working start hole by using the position coordinates of a plurality of the end face positions obtained by the plurality of end face position detecting operations.

7. A centering method of a working start hole on a wire electric discharge machine according to claim 6, wherein in each of a plurality of end face position detecting operations, a moving direction of the wire after contacting the end face is made different by an angle other than nπ (n is an integer) from the previous wire moving direction.

8. A centering method of a working start hole on a wire electric discharge machine according to claim 6, wherein in each of a plurality of end face position detection operations, the wire after contacting the end face is returned to the same position in the working start hole, and the next moving direction of the wire from that same position is different from its previous moving direction therefrom.

9. A centering method of a working start hole on a wire electric discharge machine according to any one of claims 6 to 8, wherein an average of a plurality of the end face position coordinates obtained by a plurality of the end face directing operations is obtained, and the average is made into a center of the working start hole.

10. A centering method of a working start hole on a wire electric discharge machine according to any one of claims 6 to 8, wherein there are obtained a maximum value and a minimum value of a plurality of the end face position coordinates obtained by a plurality of the end face directing operations, and an average of the maximum values and the minimum values is made into a center of the working start hole.
